# EUROPEAN PATENT APPLICATION

(11) **EP 4 316 703 A1**
(43) Date of publication of application: **07.02.2024**
(21) Application number: 22779795.8
(22) Date of filing: 04.03.2022
(51) Int. Cl.: B23B 21/00, B23B 29/24, B23B 47/30, B23Q 1/01, B23Q 1/48

(54) **MACHINE TOOL**

(30) Priority: 31.03.2021 JP 2021059598
(71) Applicant: Star Micronics Co., Ltd., Shizuoka-shi, Shizuoka 422-8654 (JP)
(72) Inventor: OHTA, Rui, Shizuoka-shi, Shizuoka 422-8654 (JP); KURODA, Shingo, Shizuoka-shi, Shizuoka 422-8654 (JP)
(74) Representative: Grünecker Patent- und Rechtsanwälte PartG mbB
(86) International application number: PCT/JP2022/009272
(87) International publication number: WO 2022/209570

(57) **Abstract**

A machine tool with good maintainability is provided. The machine tool includes a second spindle 61 that is rotatable about a second spindle axis CL2 while gripping a cut-off portion of a workpiece W2, a second tool post 7 to which a rotary tool T2R that machines the cut-off portion of the workpiece W2 gripped by the second spindle 61 is attached, and a second tool post base 70 that supports the second tool post 7, in which the second tool post 7 includes a power transmission mechanism 74 that transmits a driving force for rotationally driving the rotary tool T2R, a base table 71, and a tool mounting member 72 to which the rotary tool T2R is attached, the power transmission mechanism 74 is disposed between the base table 71 and the tool mounting member 72, a back side of the base table 71 faces the second tool post base 70 and the tool mounting member 72 is disposed on a front side of the base table 71, and the tool mounting member 72 is detachably attached to the base table 71.

## Description

### TECHNICAL FIELD

The present invention relates to a machine tool including a spindle that is rotatable about a spindle axis while gripping a workpiece, a tool post to which a rotary tool that machines the workpiece gripped by the spindle is attached, and a tool post base that supports the tool post.

### BACKGROUND ART

There is a known machine tool including a spindle that is rotatable while gripping a workpiece, and a tool post to which a rotary tool that machines the workpiece gripped by the spindle is attached (see, for example, PTL 1 or the like). The tool post described in PTL 1 houses a power transmission mechanism including a plurality of gears. The power transmission mechanism transfers a driving force generated by driving a motor to the rotary tool. Accordingly, the workpiece can be machined while the rotary tool is rotated.

### PRIOR ART DOCUMENT

### PATENT DOCUMENT

PTL 1: Japanese Unexamined Patent Application Publication No. 2017-209737

### SUMMARY

### TECHNICAL PROBLEM

By the way, when a component, such as a gear constituting the power transmission mechanism described in PTL 1, is worn or broken, the worn or broken component may require to be repaired or replaced. However, with regard to the tool post described in PTL 1, another tool post is disposed in proximity to the back side opposite to the front side to which a tool is attached, and the front side of a lower portion of the tool post in which the power transmission mechanism is housed is covered with a tool post base. Therefore, there is a problem in that overhaul or replacement of a component of the power transmission mechanism housed in the tool post is difficult and maintainability is bad.

The present invention addresses the problem described above with an object of providing a machine tool with good maintainability.

### SOLUTION TO PROBLEM

A machine tool of the present invention that achieves the object described above includes:
a spindle that is rotatable about a spindle axis while gripping a workpiece;
a tool post to which a rotary tool that machines the workpiece gripped by the spindle is attached; and
a tool post base that supports the tool post, in which
the tool post includes a power transmission mechanism that transmits a driving force for rotationally driving the rotary tool, a base table, and a tool mounting member to which the rotary tool is attached,
the power transmission mechanism is disposed between the base table and the tool mounting member,
a back side of the base table faces the tool post base, and the tool mounting member is disposed on a front side of the base table, and
the tool mounting member is detachably attached to the base table.

According to this machine tool, since the power transmission mechanism is exposed by removing the tool mounting member from the base table, maintenance of the power transmission mechanism becomes easier.

Here, the power transmission mechanism may be covered with the base table and the tool mounting member. In addition, the power transmission mechanism may be stored in a storage space formed in the base table. Furthermore, in the power transmission mechanism, the repair or replacement of components may be possible on the front side of the base table by removing the tool mounting member from the base table. In addition, the base table may be movable with respect to the tool post base.

In the machine tool, the tool mounting member may be attached to the base table with a fastening member, and the fastening member may be removable from the front side of the base table.

Since the fastening member and the tool mounting member are removable from the front side of the tool post, maintenance of the power transmission mechanism becomes easier.

In addition, in the machine tool, the tool post base may have a guiding member that guides movement of the tool post, and the tool post may be movable in an orthogonal axis direction that is orthogonal to the spindle axis by being guided by the guiding member.

Since the back side of the tool post is blocked by the guiding member and the guided member in the tool post in which the guided member is provided, when an attempt is made to expose the power transmission mechanism to the back side of the tool post, the power transmission mechanism needs to be disposed so as to avoid the guiding member and the guided member, thereby increasing the size of the tool post. On the other hand, the effect of improving maintainability can be obtained without increasing the size of the tool post by detachably attaching the tool mounting member to the front side of the base table.

Furthermore, in the machine tool, the tool post base may extend across the spindle axis in the orthogonal axis direction.

Since this makes the load in the direction along the spindle axis caused by machining less likely to be applied as a bending moment that bends the tool post when the workpiece gripped by the spindle is machined by the rotary tool attached to the tool post, the machining accuracy of machining that uses the tool post can be improved.

Here, the tool post base may be fixed to the legs that form the base of the machine tool. In addition, in the tool post base may have a rib, and the rib may extend across the spindle axis in the orthogonal axis direction.

In addition, in the machine tool, the guiding member may extend across the spindle axis in the orthogonal axis direction.

Since this enables the guiding member to receive the load in the direction along the spindle axis caused by machining when the workpiece gripped by the spindle is machined by the rotary tool attached to the tool post, occurrence of a bending moment that bends the tool post can be suppressed, and the machining accuracy of machining that uses the tool post can be further improved.

### ADVANTAGEOUS EFFECTS OF INVENTION

According to the present invention, the machine tool with good maintainability can be provided.

### BRIEF DESCRIPTION OF THE DRAWINGS

FIG. 1 is a front view illustrating the external appearance of an NC lathe of an embodiment.
FIG. 2 is a plan view schematically illustrating an internal structure of the NC lathe in FIG. 1.
FIG. 3 is a front view of a second headstock and a second tool post illustrated in FIG. 2 as seen from the front side of the NC lathe.
FIG. 4A is a side view of the second tool post as seen from the right side in FIG. 3.
FIG. 4B is a back view of the second tool post and a tool post base as seen from the back of the NC lathe.
FIG. 5 is a perspective view illustrating the second tool post and the tool post base from which a product receiving member and a tool mounting unit have been removed.
FIG. 6 illustrates cross-sections of the second tool post and the tool post base taken along line A-A in FIG. 4A.
FIG. 7 is a side view similar to FIG. 4A, illustrating the second tool post from which the tool mounting member has been removed.

### DETAILED DESCRIPTION

An embodiment of the present invention will be described below with reference to the drawings. In the embodiment, an example in which the present invention is applied to an NC (numerical control) lathe will be described.

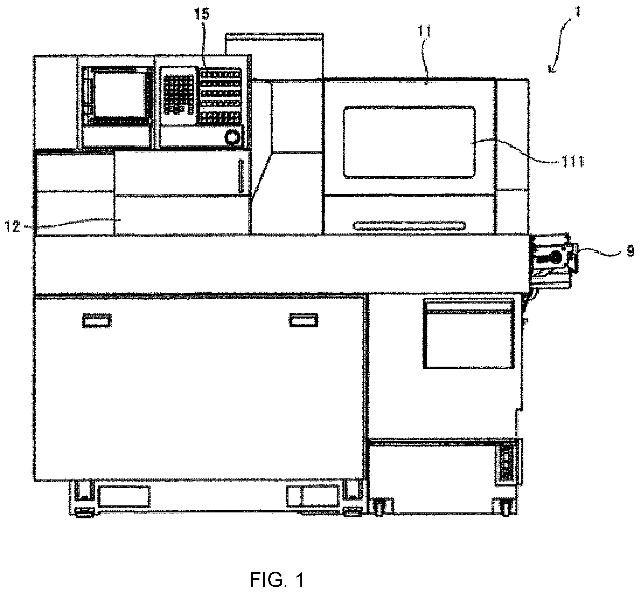

FIG. 1 is a front view illustrating the external appearance of an NC lathe of an embodiment.

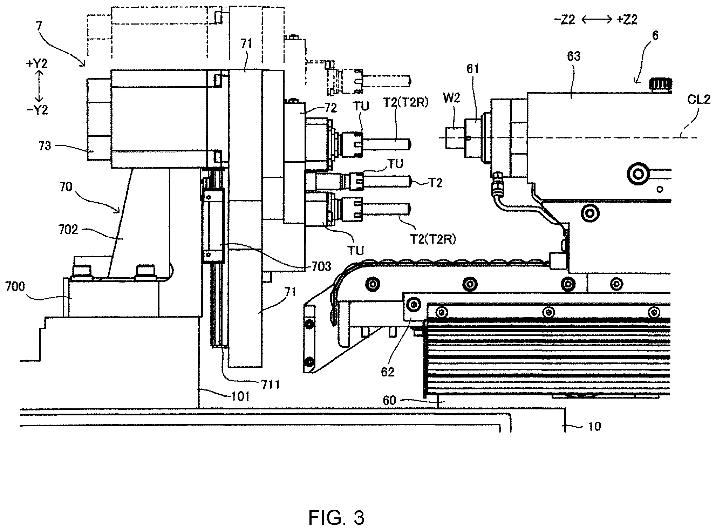

As illustrated in FIG. 1, an NC lathe 1 includes a machining chamber 11, a first headstock chamber 12, and an operation panel 15 on a leg 10 (see FIG. 3) that forms a base. This NC lathe 1 corresponds to an example of a machine tool. It should be noted that FIG. 1 also illustrates a downstream end portion of a discharge conveyor 9 that conveys, to the outside of the NC lathe 1, a machined workpiece having been machined by the NC lathe 1. The machining chamber 11 is disposed on the right side of the NC lathe 1 as seen from the front side. The machining chamber 11 has a window 111 through which the inside of the machining chamber 11 is visually identified. The first headstock chamber 12 is disposed on the left side of the NC lathe 1 as seen from the front side. The operation panel 15 is disposed above the first headstock chamber 12. This operation panel 15 is an input device for operating the NC lathe 1. The operator of the NC lathe 1 stands on the front side of the sheet in FIG. 1, operates the NC lathe 1 by using the operation panel 15, and checks machining operation or the like while checking the inside of the machining chamber 11 through the window 111.

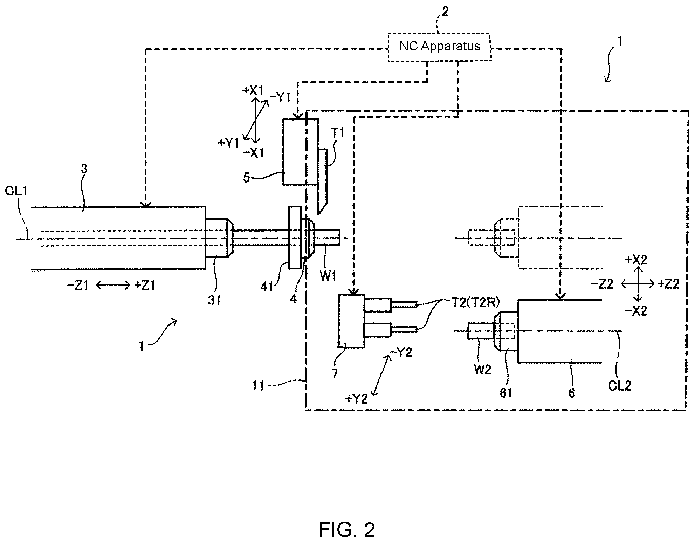

FIG. 2 is a plan view schematically illustrating an internal structure of the NC lathe in FIG. 1. FIG. 2 illustrates the range of the machining chamber 11 by a thick dot-dashed line.

As illustrated in FIG. 2, an NC apparatus 2, a first headstock 3, a guide bush 4, a first tool post 5, a second headstock 6, and a second tool post 7 are provided in the NC lathe 1. The NC apparatus 2 stores an NC program. The NC apparatus 2 is a computer that numerically controls and moves the first headstock 3, the first tool post 5, the second headstock 6, and the second tool post 7 according to the NC program. The NC apparatus 2 also controls the rotation of a first spindle 31 and a second spindle 61, which will be described later. In addition, a rotary tool in which a tool T1 itself rotates may be attached to the first tool post 5. The NC apparatus 2 also controls the rotation of the rotary tool. Similarly, a rotary tool T2R in which a tool T2 itself rotates may be attached to the second tool post 7. The NC apparatus 2 also controls the rotation of the rotary tool T2R. It should be noted that, the NC lathe 1 can be operated not only by using the NC program but also by directly inputting a command to the NC apparatus 2 through the operation panel 15 illustrated in FIG. 1.

The first headstock 3 is disposed in the first headstock chamber 12 illustrated in FIG. 1. The first spindle 31 is mounted on the first headstock 3. The first headstock 3 is movable in a Z1-axis direction together with the first spindle 31. The Z1-axis direction is the horizontal direction and is the left-right direction in FIG. 2. The first spindle 31 has a first chuck, such as a collet. In addition, the first spindle 31 releasably grips a long stick-shaped workpiece W1 inserted therein by the first chuck. The first spindle 31 is rotatable about a first spindle axis CL1 while gripping the workpiece W1. The direction of the first spindle axis CL1 coincides with the Z1-axis direction. The first spindle 31 has a motor (not illustrated), such as a built-in motor. The motor rotates by receiving a command from the NC apparatus 2, and accordingly, the first spindle 31 rotates about the first spindle axis CL1. As a result, the workpiece W1 gripped by the first spindle 31 rotates about the first spindle axis CL1.

The guide bush 4 is fixed to the leg 10 (see FIG. 3) of the NC lathe 1 by a guide bush support base 41. An end surface of the guide bush 4 opposite to the side on which the first spindle 31 is disposed is exposed to the inside of the machining chamber 11. The guide bush 4 supports an end portion of the workpiece W1 having passed through the inside of the first spindle 31 slidably in the Z1-axis direction. The portion of this guide bush 4 that supports the workpiece W1 is rotatable about the first spindle axis CL1 in sync with the first spindle 31. That is, the first spindle axis CL1 is also the rotary axis of a portion of the workpiece W1 supported by the guide bush 4. Since the guide bush 4 suppresses the bending of the workpiece W1 during machining, particularly a long and narrow workpiece W1 can be machined with high accuracy.

The first tool post 5 is movable in an X1-axis direction that is orthogonal to the Z1-axis direction and aligned with the horizontal direction, and a Y1-axis direction that is aligned with the vertical direction. In FIG. 2, the vertical direction is the X1-axis direction, and the direction that is orthogonal to the sheet is the Y1-axis direction. The tool T1 that machines the workpiece W1 is attached to the first tool post 5. FIG. 2 illustrates the state in which the tool T1 is attached to the first tool post 5. This tool T1 is disposed in the machining chamber 11. A plurality of types of tools T1 including a tool for machining the outer diameter, a tool for cut off, and the like are attached to the first tool post 5, so as to be arranged in the Y1-axis direction. Any tool T1 is selected from the plurality of types of tools T1 by moving the first tool post 5 in the Y1-axis direction. Then, the selected tool T1 cuts into the workpiece W1 gripped by the first spindle 31 and the front end portion of the workpiece W1 is machined by moving the first tool post 5 in the X1-axis direction.

The second headstock 6 is disposed in the machining chamber 11. The second spindle 61 is mounted on the second headstock 6. This second spindle 61 corresponds to an example of a spindle. The second headstock 6 is movable in an X2-axis direction and a Z2-axis direction together with the second spindle 61. This X2-axis direction is the same as the X1-axis direction described above, and the Z2-axis direction is the same as the Z1-axis direction described above. In FIG. 2, the solid line indicates the state in which the second headstock 6 as well as the second spindle 61 is located at a position facing the second tool post 7, and the dot-dot-dash line indicates the state in which the second headstock 6 as well as the second spindle 61 is located at a position facing the guide bush 4. The structure of the second headstock 6 will be detailed later. The second spindle 61 has a second chuck, such as a collet. The second spindle 61 receives the cut-off portion of the workpiece W2 that has been machined by the first spindle 31 and then cut off by a cutting-off tool. This cut-off portion of the workpiece W2 corresponds to an example of a workpiece. The second spindle 61 releasably grips the cut-off portion of the workpiece W2 received from the first spindle 31 by using the second chuck. The second spindle 61 is rotatable about a second spindle axis CL2 while gripping the cut-off portion of the workpiece W2. The direction of the second spindle axis CL2 coincides with the Z2-axis direction. This second spindle axis CL2 corresponds to an example of a spindle axis. The second spindle 61 has a motor, such as a built-in motor. The motor rotates by receiving a command from the NC apparatus 2, and accordingly, the second spindle 61 rotates about the second spindle axis CL2. As a result, the cut-off portion of the workpiece W2 gripped by the second spindle 61 rotates about the second spindle axis CL2.

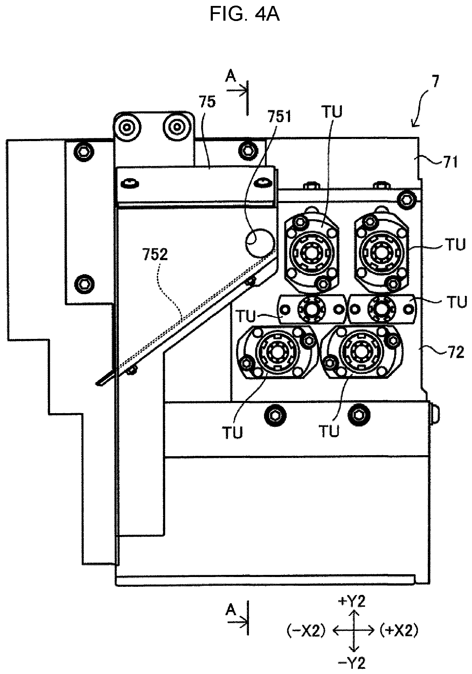

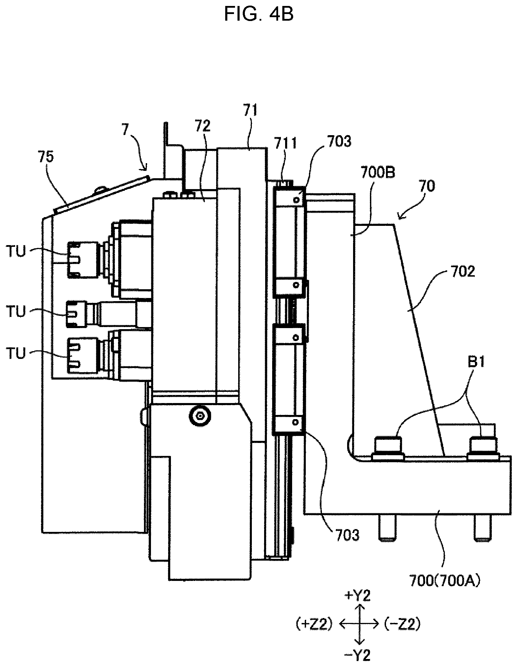

The second tool post 7 is disposed in the vicinity of a corner portion closer to the first headstock 3 and the front side of the NC lathe 1 in plan view in the machining chamber 11. The second tool post 7 is movable in a Y2-axis direction. This Y2-axis direction is the same as the Y1-axis direction described above and corresponds to an example of the orthogonal axis direction. A plurality of tools T2 for machining the cut-off portion of the workpiece W2 gripped by the second spindle 61 is attached to the second tool post 7. FIG. 2 illustrates the state in which the tools T2 are attached to the second tool post 7. In addition, a product receiving member 75 (see FIG. 4) that receives the workpiece that has been machined by the tools T2 is also mounted on the second tool post 7. The plurality of types of tools T2, such as a drill and an end mill, are attached to the second tool post 7. Although not illustrated in FIG. 2, the tools T2 are attached so as to be arranged not only in the X2-axis direction but also in the Y2-axis direction. Any tool T2 is selected from the plurality of types of tools T2 by moving the second headstock 6 in the X2-axis direction and moving the second tool post 7 in the Y2-axis direction. In addition, the cut-off end portion of the cut-off portion of the workpiece W2 gripped by the second spindle 61 is machined by moving the second headstock 6 in the Z2-axis direction. The structure of the second tool post 7 will be described in detail later.

FIG. 3 is a front view of a second headstock and a second tool post illustrated in FIG. 2 as seen from the front side of the NC lathe.

As illustrated in FIG. 3, the second headstock 6 is disposed on a second headstock base 60 formed on the leg 10. The second headstock 6 includes an X2-axis table 62 that is movable in the X2-axis direction and a Z2-axis table 63 that is mounted on the X2-axis table 62 and is movable in the Z2-axis direction. The X2-axis table 62 moves in the X2-axis direction together with the second spindle 61 and the Z2-axis table 63 by driving the X2-axis motor (not illustrated). In addition, the Z2-axis table 63 moves in the Z2-axis direction together with the second spindle 61 by driving the Z2-axis motor (not illustrated). When the X2-axis table 62 moves the second headstock 6 in the X2-axis direction, the second spindle 61 moves to the position facing the first spindle 31, which is indicated by the dot-dot-dash line in FIG. 2, and the position facing the second tool post 7, which is indicated by the solid line in FIG. 2. FIG. 3 illustrates the state in which the second spindle 61 is located at a position facing the second tool post 7.

The second tool post base 70 is fixed to a bump portion 101 formed on the leg 10. This second tool post base 70 corresponds to an example of a tool post base. The second tool post base 70 supports the second tool post 7. A Y2-axis motor (not illustrated) is attached to the second tool post base 70. The second tool post 7 moves in the Y2-axis direction by driving this Y2-axis motor. The structure of the second tool post base 70 will be described in detail later.

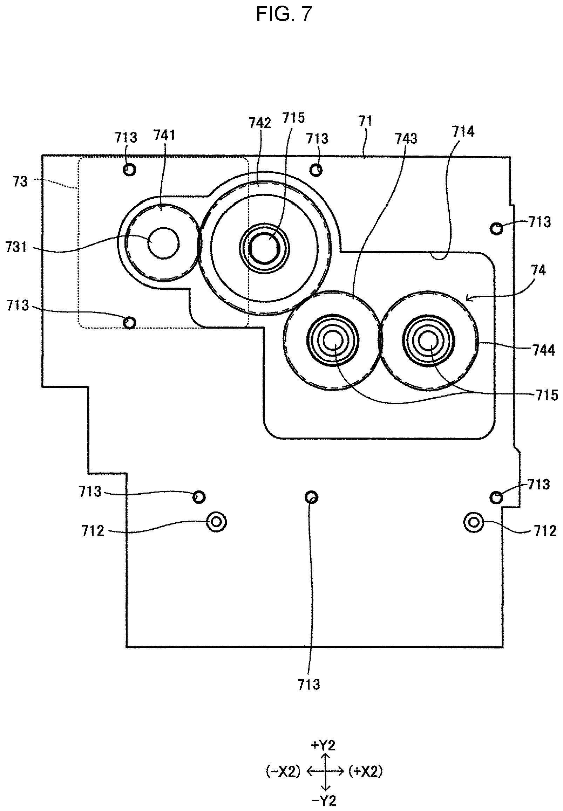

The second tool post 7 includes a base table 71, a tool mounting member 72, a rotary tool motor 73, a power transmission mechanism 74 (see FIG. 7), and a product receiving member 75 (see FIG. 4). This second tool post 7 corresponds to an example of a tool post. It should be noted that the second tool post 7 may have a coolant nozzle that discharges a coolant liquid for cooling the tool T2 and the cut-off portion of the workpiece W2. The two tools T2, which are gripped by the tool mounting units TU and arranged in the X2-axis direction together with the tool mounting units TU, can be attached to the second tool post 7 of the embodiment in three rows in the Y2-axis direction. FIG. 3 illustrates the state in which the tool mounting units TU and the tools T2 are attached to the second tool post 7. In FIG. 3, the dot-dot-dash lines illustrate the upper end portion of the second tool post 7 having moved upward and the upper end portion of the tool mounting unit TU and the tool T2 attached to the second tool post 7. Of the tools T2 attached in three rows in the Y2-axis direction, the tools T2 attached in upper and lower rows are the rotary tools T2R that rotate. The rotary tool motor 73 is a motor used to rotate these rotary tools T2R. This rotary tool motor 73 is attached to the upper end of the base table 71. Any tool T2 is selected from the six tools T2 by moving the second headstock 6 in the X2-axis direction and moving the second tool post 7 in the Y2-axis direction, and the selected tool T2 faces the cut-off portion of the workpiece W2 gripped by the second spindle 61. In addition, the cut-off end side portion of the cut-off portion of the workpiece W2 is machined mainly by moving the second spindle 61 in the Z2-axis direction. FIG. 3 illustrates the state in which the rotary tool T2R in the upper row faces the cut-off portion of the workpiece W2 gripped by the second spindle 61. It should be noted that, depending on the type of machining, machining may be performed not only by movement of the second spindle 61 in the Z2-axis direction, but also by movement of the second spindle 61 in the X2-axis direction or movement of the second tool post 7 in the Y2-axis direction.

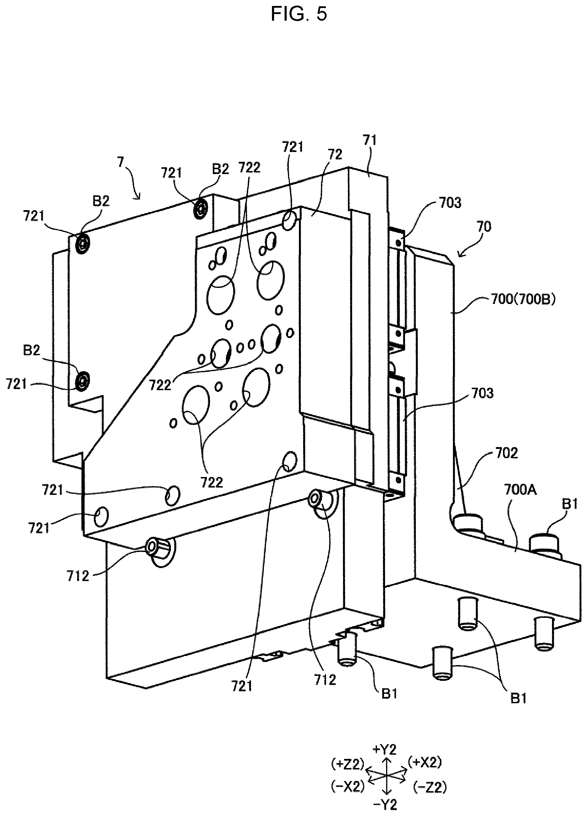

FIG. 4A is a side view of the second tool post as seen from the right side in FIG. 3, and FIG. 4B is a back view of the second tool post and a tool post base as seen from the back of the NC lathe. In addition, FIG. 5 is a perspective view illustrating the second tool post and the tool post base from which the product receiving member and the tool mounting unit have been removed. It should be noted that the tools T2 are not illustrated in FIGs. 4A and 4B. In addition, it should be noted that the rotary tool motor 73 is not also illustrated in FIG. 4B.

As illustrated in FIGs. 4B and 5, the second tool post base 70 includes a fixed base 700, a rib 702, and four guiding members 703. It should be noted that FIGs. 4B and 5 illustrate two guiding members 703 provided on the front side of the sheet of the four guiding members 703. The fixed base 700 is an L-shaped steel material as seen from the back of the NC lathe 1 and includes a horizontal portion 700A having a surface orientation in the horizontal direction and a vertical portion 700B having a surface orientation in the vertical direction. The fixed base 700 is fixed to the bump portion 101 of the leg 10 illustrated in FIG. 3 by four base fixing bolts B 1 having passed through holes formed in the horizontal portion 700A. The vertical portion 700B rises upward from a side edge portion, which is closer to the base table 71, of the horizontal portion 700A. The rib 702 is connected to the horizontal portion 700A and the vertical portion 700B and rises upward. Two guiding members 703 are arranged in the horizontal direction and two guiding members 703 are arranged in the vertical direction. These guiding members 703 are fixed to a side end surface, which is closer to the base table 71, of the vertical portion 700B. A fitting portion into which a guided member 711 described later is inserted is formed in each of the guiding members 703. It should be noted that the guide structure of the guided member 711 and the guiding member 703 may be a guide structure using a dovetail groove.

As illustrated in FIG. 4B, the base table 71 of the second tool post 7 is a thick plate that has the rail-shaped guided member 711 on the back side thereof and has a surface orientation in the vertical direction. It should be noted that the guided member 711 here is a member supported by the fitting portion described above. In FIG. 4B, the right side (-Z side) in the figure is the back side of the base table 71. The back side of this base table 71 faces the vertical portion 700B of the second tool post base 70. The second tool post 7 is movable in the Y2-axis direction because the guided member 711 provided in the base table 71 is guided by the guiding member 703. The power transmission mechanism 74 (see FIG. 7), which will be described later, is disposed on the front side of the base table 71. In addition, as illustrated in FIG. 5, two reference projections 712 project on the front side of the base table 71.

The tool mounting member 72 is disposed on the front side of the base table 71. The tool mounting member 72 is provided with seven mounting recessed portions 721 each having a through-hole in a bottom surface thereof. The tool mounting member 72 is detachably fixed to the base table 71 by seven mounting member fixing bolts B2 inserted into these mounting recessed portions 721. Three of the seven mounting member fixing bolts B2 are illustrated in FIG. 5. These seven mounting member fixing bolts B2 correspond to an example of a fastening member. The mounting member fixing bolts B2 can be removed by inserting a hexagonal wrench or the like into the mounting recessed portions 721 from the front side of the base table 71 and turning the mounting member fixing bolts B2. The tool mounting member 72 can be removed from the base table 71 by removing all of the seven mounting member fixing bolts B2. In addition, the removed tool mounting member 72 can be attached to the base table 71 by placing the tool mounting member 72 on the reference projections 712, adjusting the position in the X2-axis direction with a jig, and tightening the seven mounting member fixing bolts B2. Tool mounting portions 722 are formed in the tool mounting member 72. The tool mounting portions 722 are holes to which the tools T2 illustrated in FIG. 3 can be attached via the tool mounting units TU. The tool mounting units TU are fixed to the front side of the tool mounting member 72 by inserting bolts into screw holes formed around the tool mounting portion 722. When the tool T2 attached to the second tool post 7 is a drill or an end mill that has an axis direction in the Z2-axis direction, the center position of the tool mounting portion 722 and the center position of the tool mounting unit TU and the tool T2 to be attached usually coincide with each other on the XY plane that is orthogonal to the Z2 axis. A total of six tool mounting portions 722 are formed such that two tool mounting portions 722 arranged in the X2-axis direction are arranged in three rows at intervals in the Y2-axis direction. The tool mounting unit TU can be attached to each of these six tool mounting portions 722. The four tool mounting portions 722 disposed in the upper and lower rows of the six tool mounting portions 722 can be attached by the tool mounting units TU including gears and rotation mechanisms that rotate by engaging with the power transmission mechanism 74 (see FIG. 7).

As illustrated in FIG. 4A, the product receiving member 75 has a product receiving port 751 and an inclined surface 752. The product receiving port 751 receives the machined workpiece that has been machined. The inclined surface 752 moves the machined workpiece received in the product receiving member 75 by using a height difference. The machined workpiece that has rolled on the inclined surface 752 and rolled down to the lower left in FIG. 4A is transported to the outside of the NC lathe 1 by the discharge conveyor 9 for which only downstream end portion is illustrated in FIG. 1. It should be noted that, of the seven mounting recessed portions 721 illustrated in FIG. 5, three mounting recessed portions 721 illustrated at the lower end of the tool mounting portion 722 in FIG. 5 and one mounting recessed portion 721 illustrated at the right end of the tool mounting portion 722 in FIG. 5 are covered with the product receiving member 75. Accordingly, the product receiving member 75 needs to be removed in advance to remove the tool mounting member 72 from the base table 71.

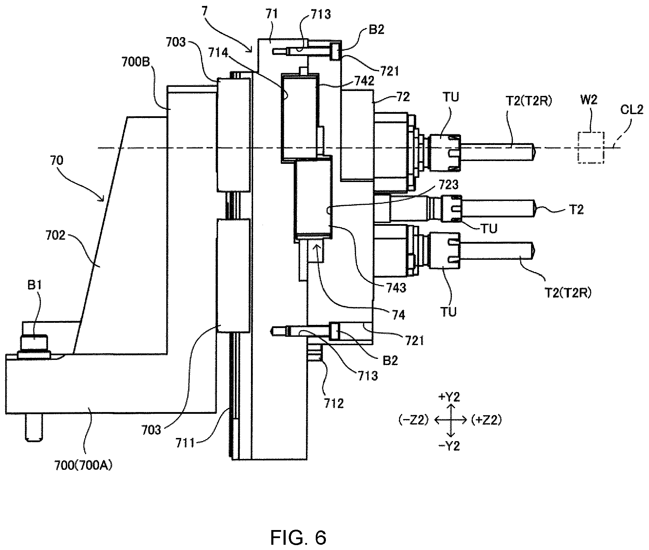

FIG. 6 is a sectional view of the second tool post and the tool post base taken along line A-A in FIG. 4A. In addition, FIG. 7 is a side view similar to FIG. 4A, illustrating the second tool post from which the tool mounting member has been removed. It should be noted that FIG. 6 also illustrates the tools T2, the cut-off portion of the workpiece W2, and the second spindle axis CL2. In addition, FIG. 6 does not illustrate hatching for indicating cross sections.

As illustrated in FIG. 6, the power transmission mechanism 74 is disposed between the base table 71 and the tool mounting member 72. This power transmission mechanism 74 transmits a driving force for rotationally driving the rotary tool T2R. The base table 71 has a table recessed portion 714, which defines a storage space in which the power transmission mechanism 74 is stored. In addition, the tool mounting member 72 has a mounting member recessed portion 723 for receiving a part of the power transmission mechanism 74 projecting to the front side of the base table 71 from the table recessed portion 714. The power transmission mechanism 74 is covered with the base table 71 and the tool mounting member 72. In addition, the second tool post base 70 extends across the second spindle axis CL2 in the Y2-axis direction. Specifically, the vertical portion 700B, the rib 702, and the guiding member 703 disposed on the upper side extend across the second spindle axis CL2 in the Y2-axis direction.

The power transmission mechanism 74 is exposed to the front side of the base table 71 as illustrated in FIG. 7 by removing the tool mounting member 72. The power transmission mechanism 74 includes a driving gear 741, a first driven gear 742, a second driven gear 743, and a third driven gear 744. The driving gear 741 is fixed to an output shaft 731 of the rotary tool motor 73 attached to the back side of the base table 71. The first driven gear 742, the second driven gear 743, and the third driven gear 744 are rotatably supported by three fixed shafts 715 projecting to the front side of the base table 71 from the bottom surface of the table recessed portion 714 of the base table 71. The first driven gear 742, the second driven gear 743, and the third driven gear 744 rotate as the driving gear 741 is rotationally driven by the rotary tool motor 73. In addition, when the rotary tools T2R are attached to the second tool posts 7 together with the tool mounting units TU as illustrated in FIG. 6, the gears provided in the tool mounting units TU engage with the second driven gear 743 or the third driven gear 744 illustrated in FIG. 7. Accordingly, the rotation of the driving gear 741 is transmitted to the rotary tool T2R and the rotary tool T2R rotates.

The driving gear 741, the first driven gear 742, the second driven gear 743, or the third driven gear 744 that constitute the power transmission mechanism 74 may be worn or broken due to prolonged use. In the NC lathe 1 of the embodiment, since the power transmission mechanism 74 is exposed to the front side of the base table 71 as illustrated in FIG. 7 by removing the tool mounting member 72, the worn or broken gear can be removed from the front side of the base table 71, or repaired or replaced on the front side of the base table 71. In the machining chamber 11, a space in which the tools T2 and the tool mounting units TU are to be disposed, or a large space for machining is provided on the front side of the base table 71. Accordingly, the power transmission mechanism 74 exposed to the front side of the base table 71 is easy to maintain. In addition, in the embodiment, since the back side of the base table 71 is blocked by the guiding member 703 and the guided member 711, when an attempt is made to expose the power transmission mechanism 74 to the back side, the power transmission mechanism 74 needs to be disposed so as to avoid the guiding member 703 and the guided member 711, thereby increasing the size of the second tool post 7. Even in such a structure, when components of the power transmission mechanism 74 can be repaired or replaced on the front side of the base table 71, the effect of improving maintainability can be obtained without increasing the size of the second tool post 7. Furthermore, in the embodiment, the tool mounting member 72 can be easily removed because the mounting member fixing bolts B2 that fix the tool mounting member 72 to the base table 71 can also be removed from the front side of the base table 71. In addition, when the cut-off portion of the workpiece W2 is machined by the tool T2, a load in the direction of the second spindle axis CL2 is applied to the second tool post 7 at approximately the height position of the second spindle axis CL2. When the height position of the second spindle axis CL2 is higher than that of the second tool post base 70, the load in the direction of the second spindle axis CL2 caused by machining is applied to the second tool post 7 as a bending moment, and accordingly, the second tool post 7 may bend. When the second tool post 7 bends, the machining position may change or the second tool post 7 may vibrate, possibly reducing the machining accuracy of the cut-off portion of the workpiece W2. In the embodiment, since the vertical portion 700B, the rib 702, and the guiding member 703 of the second tool post base 70 extend across the second spindle axis CL2 in the Y2-axis direction, the load caused by machining can be received by the second tool post base 70 having high rigidity. It should be noted that, although a compressive force in the direction of the second spindle axis CL2 acts on the second tool post 7 of the embodiment, the compressive force does not deform the second tool post 7 unlike the bending moment or, even if the second tool post 7 deforms, the deformation is very small, thereby having little effect on the machining accuracy. Accordingly, high-accuracy machining can be performed by using the second tool post 7. It should be noted that, when the vertical portion 700B, the rib 702, and the guiding member 703 of the second tool post base 70 extend across the second spindle axis CL2 in the X2 direction as well, the occurrence of a bending moment that bends the second tool post 7 can be prevented with certainty, and the machining accuracy in machining using the second tool post 7 can be further enhanced.

The present invention is not limited to the embodiment described above, and various modifications can be made within the scope of the appended claims. For example, the NC lathe 1 of the embodiment has the structure in which the X2-axis direction is horizontal and the Y2-axis direction is vertical, but the lathe may have a so-called slant structure in which the X2-axis direction is inclined with respect to the horizontal direction and the Y2-axis direction is inclined with respect to the vertical direction. It should be noted that the X2-axis direction, the Y2-axis direction, and the Z2-axis direction are orthogonal to each other in the slant structure as well. In addition, the X1-axis direction may be the vertical direction, and the Y1-axis direction may be the horizontal direction. Furthermore, an example of applying the present invention to the NC lathe 1 is indicated in the embodiment, but the present invention may be applied to other machine tools, such as a machining center. In addition, the second tool post 7 may be immovable or may be movable in a plurality of axial directions, such as the X2-axis direction and the Y2-axis direction. Furthermore, the power transmission mechanism 74 may be a belt or a chain or a combination of a plurality of types of transmission members, such as a gear, a belt, and a chain. In addition, the fixed shafts 715 may project from the tool mounting member 72, and the first driven gear 742, the second driven gear 743, or the third driven gear 744 may be attached to the tool mounting member 72.

A component provided in only one of the modifications described above may be applied to another modification.

### REFERENCE SIGNS LIST

1 NC lathe (machine tool)
7 second tool post (tool post)
61 second spindle (spindle)
70 second tool post base (tool post base)
71 base table
72 tool mounting member
74 power transmission mechanism
CL2 second spindle axis (spindle axis)
T2R rotary tool
W2 cut-off portion of workpiece (workpiece)

## Claims

1. A machine tool comprising:
a spindle that is rotatable about a spindle axis while gripping a workpiece;
a tool post to which a rotary tool that machines the workpiece gripped by the spindle is attached; and
a tool post base that supports the tool post,
wherein the tool post includes a power transmission mechanism that transmits a driving force for rotationally driving the rotary tool, a base table, and a tool mounting member to which the rotary tool is attached,
the power transmission mechanism is disposed between the base table and the tool mounting member,
a back side of the base table faces the tool post base, and the tool mounting member is disposed on a front side of the base table, and
the tool mounting member is detachably attached to the base table.

2. The machine tool of claim 1,
wherein the tool mounting member is attached to the base table with a fastening member, and
the fastening member is removable from the front side of the base table.

3. The machine tool of claim 1 or 2,
wherein the tool post base has a guide that guides movement of the tool post, and
the tool post is movable in an orthogonal axis direction that is orthogonal to the spindle axis by being guided by the guide.

4. The machine tool of claim 3,
wherein the tool post base extends across the spindle axis in the orthogonal axis direction.

5. The machine tool of claim 4,
wherein the guide extends across the spindle axis in the orthogonal axis direction.
